# EUROPÄISCHE PATENTSCHRIFT

(11) **EP 4 400 713 B1**
(45) Veröffentlichungstag und Bekanntmachung des Hinweises auf die Patenterteilung: **18.11.2026**
(21) Anmeldenummer: 24151137.7
(22) Anmeldetag: 10.01.2024
(51) Int. Cl.: F03D 1/06, F03D 13/10

(54) **GETEILTES WINDENERGIEANLAGENROTORBLATT SOWIE VERFAHREN ZUM VERBINDEN ZWEIER ROTORBLATTSEGMENTE EINES WINDENERGIEANLAGENROTORBLATTS**
SPLIT WIND TURBINE ROTOR BLADE AND METHOD FOR CONNECTING TWO ROTOR BLADE SEGMENTS OF A WIND TURBINE ROTOR BLADE
PALE DE ROTOR D'ÉOLIENNE DIVISÉE ET PROCÉDÉ DE LIAISON DE DEUX SEGMENTS DE PALE DE ROTOR D'UNE PALE DE ROTOR D'ÉOLIENNE

(30) Priorität: 12.01.2023 DE 102023100609
(43) Veröffentlichungstag der Anmeldung: 17.07.2024
(73) Patentinhaber: Nordex Energy SE & Co. KG, 22419 Hamburg (DE)
(72) Erfinder: ZAROCHENTSEV, Alexander, 22419 Hamburg (DE); LIPKA, Thomas, 22419 Hamburg (DE)
(74) Vertreter: Völkl Siebenson Patentanwälte - Partnerschaft mbB

(56) Entgegenhaltungen:
- EP-A1- 3 974 643
- WO-A1-2022/042809
- US-A1- 2012 141 287
- US-A1- 2014 271 210
- US-B2- 9 822 759

## Beschreibung

Die Erfindung betrifft ein geteiltes Windenergieanlagenrotorblatt sowie ein Verfahren zum Verbinden zweier Rotorblattsegmente eines Windenergieanlagenrotorblatts.

Windenergieanlagen mit Windenergieanlagenrotorblättern (im Folgenden auch kurz: Rotorblätter) sind aus dem Stand der Technik vielfach bekannt und werden verwendet, um Windenergie in elektrische Energie umzuwandeln. Ein solches Rotorblatt kann als geteiltes oder segmentiertes Rotorblatt ausgeführt sein, bei welchem Rotorblattsegmente in der Längsrichtung des Rotorblatts angeordnet und im Bereich der Teilungsstelle zusammengefügt sind. Zum Verbinden der beiden Rotorblattsegmente kommen in der Regel mechanische Verbindungen zum Einsatz. Beispielsweise werden pro Rotorblattsegment jeweils eine Vielzahl von in das Laminat integrierten Verbindungselemente (sogenannte Inserts, beispielsweise Querbolzen oder Lagerhülsen) vorgesehen, mittels derer die Rotorblattsegmente miteinander verbunden werden können. Typischerweise kommen hierbei Befestigungsmittel wie Befestigungsschraubbolzen oder dergleichen zum Einsatz. Zum Beispiel befinden sich die Verbindungselemente im Laminat eines jeweiligen Anschlussendes oder Teilungsflansches der Rotorblattsegmente. Die Rotorblattsegmente können direkt oder über geeignete Zwischenstücke miteinander verbunden werden.

Ein gattungsgemäßer Aufbau ist beispielsweise aus der internationalen Anmeldung WO 2015/124568 A1 bekannt.

Die US 2014/0271210 A1 bezieht sich auf Windturbinenblätter, die in Abschnitten hergestellt werden, um den Transport zu erleichtern, und schlägt ein System vor, das es ermöglicht, die Verbindung der Komponentenabschnitte der Blätter vorteilhaft zu definieren.

Geteilte Rotorblätter sind insbesondere aus Transportgründen zu bevorzugen und gewinnen vor allem aufgrund der steigenden Gesamtlänge von Rotorblättern zunehmend an Bedeutung.

Beim Segmentieren von Rotorblättern werden typischerweise die in Faserverbundbauweise ausgeführten Primärstrukturen (Hauptgurte), welche beispielsweise aus hochfesten und hochsteifen Endlosfasern und hochgradig technologisierten und präzisen Halbzeugen (etwa Pultrudaten) bestehen, wieder zusammengefügt. Besonders hohe Kräfte, etwa mehrere 1000 kN in komplexen Lastfällen, müssen hierbei vom Spitzensegment (sogenanntes Tipsegment) über die entsprechende mechanische Verbindungsmaßnahme ins Wurzelsegment geleitet werden.

Nachteile bei der Verbindung von Rotorblattsegmenten sind beispielsweise:
- eine in der Regel hoher Aufwand bei der Feldmontage aufgrund einer hohen Teilevielfalt und benötigter Präzision
- das Einhalten von engen Toleranzen
- das Aufbringen einer Vorspannkraft und die Messung dieser (etwa das vorspannen von Bolzenverbindungen)
- die blitzschutztechnische Verbindung des Spitzensegments und des Wurzelsegments
- das oftmals geringe Maß an Zugänglichkeit zu den an der Verbindung beteiligten Komponenten
- eine Kraftübertragung in der Torsionsebene.

Eine Aufgabe, die der Erfindung zugrunde liegt, ist es, ein Konzept für ein geteiltes Rotorblatt anzugeben, welches die oben genannten Nachteile reduziert oder sogar vermeidet.

Gemäß einem ersten Aspekt wird ein Windenergieanlagenrotorblatt beschrieben, welches durch ein erstes Rotorblattsegment und ein zweites Rotorblattsegment gebildet ist. Das erste Rotorblattsegment weist ein erstes Anschlussende mit ersten Verbindungselementen auf. Das zweite Rotorblattsegment weist ein zweites Anschlussende mit zweiten Verbindungselementen auf. An das erste Rotorblattsegment ist mittels der ersten Verbindungselemente ein erster Verbindungsflansch montiert. An das zweite Rotorblattsegment mittels der zweiten Verbindungselemente ist ein zweiter Verbindungsflansch montiert. Die beiden Verbindungsflansche sind formschlüssig miteinander in Eingriff gebracht, so dass die beiden Rotorblattsegmente torsionssteif miteinander verbunden sind.

Zum Verbinden der beiden Rotorblattsegmente des Windenergieanalgenrotorblatts an der Teilungsstelle weisen diese die Vielzahl von Verbindungselementen auf. Die Verbindungselemente des einen Rotorblattsegments werden mit dem ersten Verbindungsflansch und die Verbindungselemente des anderen Rotorblattsegments werden mit dem zweiten Verbindungsflansch über Befestigungsmittel fest verbunden. Bei den Verbindungselementen kann es sich, wie eingangs bereits erwähnt, beispielsweise um sogenannte Inserts, um Querbolzen für einen sogenannten "IKEA-Anschluss" oder dergleichen handeln. Anschließend werden die Verbindungsflansche in Eingriff miteinander gebracht und fest verbunden. Die jeweiligen Verbindungen sind mechanischer Natur, wobei Befestigungsmittel wie Schraubbolzen oder dergleichen zum Einsatz können. Es werden entsprechende Montagewerkzeuge verwendet, beispielsweisebeispielsweise (hydraulische) Spannwerkzeuge.

Die Erfinder haben festgestellt, dass das Vorsehen zweier Verbindungsflansche und deren formschlüssige Verbindung eine Reihe von Vorteilen bietet und insbesondere die eingangs genannten Nachteile reduziert oder ganz vermeidet.
- Ein wesentlicher Punkt ist der Formschluss zwischen den Verbindungsflanschen. Dieser sorgt beispielswiese für eine Selbstzentrierung bzw. Selbstausrichtung der Verbindungsflansche und damit der Rotorblattsegmente bei der Montage. Dies hat den Vorteil, dass die Positionierung der Rotorblattsegmente zueinander vor der finalen Montage gröber ausfallen kann. Dadurch wird insgesamt zu einem erheblich geringeren Montageaufwand im Feld beigetragen.
- Eine Vorspannung, etwa von verwendeten Bolzenverbindungen zum Verbinden der Verbindungsflansche untereinander und mit den Rotorblattsegmenten und eine Messung der Vorspannkraft ist vereinfacht und kann beispielsweise über standardisierte Messscheiben erfolgen.
- Aufgrund des Formschlusses ist die Segmentierungsstelle torsionssteif und kann demzufolge also auch Momente um die Blattlängsachse übertragen bzw. aufnehmen.
- Weiterhin sind eine sehr geringe Teilevielfalt und ein hoher Grad an Standardteilen bei der Feldmontage ermöglicht. Beispielsweise werden nur Standardwerkzeuge im Feld benötigt. Ein Packmaß des Feld-Beipacks fällt sehr klein aus.

Bei den Verbindungselementen handelt es sich beispielsweise um in die Blattschalen des Rotorblatts bzw. dessen Rotorblattsegmente eingebettete oder darin fixierte Verbindungselemente wie Lagerhülsen, Gewindehülsen oder dergleichen. Bevorzugt werden Lagerhülsen mit Innengewinde oder Durchgangsbohrung verwendet. Die Verbindungselemente des einen Rotorblattsegments können gleichartig zu den Verbindungselementen des anderen Rotorblattsegments oder verschiedenartig sein.

Als Befestigungsmittel werden insbesondere Bolzen, etwa Schraubbolzen oder Gewindebolzen verwendet. Beispielsweise werden Längsbolzen verwendet, um die Verbindungsflansche axial, d.h. entlang der Längsachse des Rotorblatts, mit dem jeweiligen Rotorblattsegment zu verschrauben. Die beiden Verbindungsflansche untereinander werden bevorzugt mit Querbolzen verschraubt.

Unter dem Formschluss wird verstanden, dass die beiden Verbindungsflansche eine zueinander korrespondierende Formgebung derart aufweisen, die eine Ineinanderfügen erlaubt, wobei nur ein Freiheitsgrad in der translatorischen Fügerichtung vorhanden ist, bevor die beiden Verbindungsflansche fest miteinander verbunden, etwa verschraubt werden. Weitergehende Freiheitsgrade in translatorischer als auch rotatorischer Art sind durch die Ausbildung des Formschlusses unterbunden. Damit ist durch den Formschluss insbesondere ermöglicht, dass auch Torsionskräfte bzw. Momente aufgenommen werden können, die bei einer Verwindung um die Längsachse des Rotorblatts in der Teilungsstelle wirken.

Gemäß zumindest einer Ausführungsform sind für die Ausbildung des formschlüssigen Eingriffs der erste Verbindungsflansch und der zweite Verbindungsflansch axial ineinander geschoben. Dadurch ergeben sich die oben genannten Vorteile und Funktionen. Mit anderen Worten werden die beiden Verbindungsflansche in axialer Richtung, d.h. entlang der Längsachse des Rotorblatts, für die Montage ineinandergeschoben. Es ist somit ein axialer Freiheitsgrad ermöglicht, ehe die Verbindungsflansche zueinander fixiert werden.

Gemäß zumindest einer Ausführungsform weist zum Ausbilden des formschlüssigen Eingriffs der erste Verbindungsflansch als erste Formschlusselemente Rippen, Vorsprünge, Kanten, Nuten oder Konturen und der zweite Verbindungsflansch dazu korrespondierende zweite Formschlusselemente auf. Die ersten und zweiten Formschlusselemente sind beispielswiese in einer Vielzahl vorgesehen und sind beispielsweise entlang des Umfangs der Rotorblatts verteilt angeordnet. Dies ermöglicht die oben genannten Vorteile und Funktionen.

Gemäß zumindest einer Ausführungsform bildet im formschlüssigen Eingriff der erste Verbindungsflansch oder der zweite Verbindungsflansch eine Außenseite, die jeweils im Wesentlichen bündig mit der angrenzenden äußeren Oberfläche des ersten Rotorblattsegments und des zweiten Rotorblattsegments abschließt. Damit wird eine aerodynamisch besonders effektive Ausgestaltung des Rotorblatts im Bereich der Teilungsstelle bewirkt.

Gemäß zumindest einer Ausführungsform sind der erste Verbindungsflansch über Längsverbindungsmittel mit den ersten Verbindungselementen des ersten Rotorblattsegments und der zweite Verbindungsflansch über Längsverbindungsmittel mit den zweiten Verbindungselementen des zweiten Rotorblattsegments verbunden sind, während der erste Verbindungsflansch und der zweite Verbindungsflansch über Querverbindungsmittel miteinander verbunden sind. Bei den Längsverbindungsmitteln handelt es sich beispielsweise um die eingangs erwähnten Bolzen oder Schraubbolzen, die entlang der Längsachse des Rotorblatts mit den Verbindungselementen eine Verbindung herstellen. Bei den Querverbindungsmitteln handelt es sich beispielsweise ebenfalls um die eingangs erwähnten Bolzen oder Schraubbolzen, die in einer Richtung, die im Wesentlichen quer zur Längsachse des Rotorblatts verläuft, die beiden Verbindungsflansche verbinden. Die Querverbindungsmittel können auch als Niete ausgebildet sind. Die jeweiligen Längs- und/oder Querverbindungsmittel können direkt in ein Festgewinde geschraubt sein oder über Muttern verschraubt sein. Beispielsweise weisen die Verbindungselemente oder einige der Verbindungselemente solche Festgewinde auf.

Gemäß zumindest einer Ausführungsform sind die Querverbindungsmittel Querschraubbolzen und für die Verbindung der beiden Verbindungsflansche weist einer der beiden Verbindungsflansche Gewinde für die Querschraubbolzen auf, während der andere der beiden Verbindungsflansche Durchgangsbohrungen für die Querschraubbolzen aufweist. Damit wird eine besonders einfache Montage ermöglicht. Vorteilhaft können dadurch gröbere Fertigungs- bzw. Montagetoleranzen kompensiert werden.

Gemäß zumindest einer Ausführungsform sind die Querverbindungsmittel zweireihig entlang der Umfangsrichtung des Rotorblatts an der Saug- und Druckseite der Verbindungsflansche angeordnet. Damit wird eine besonders steife und sichere Verbindung erreicht. Es sind auch andere Anordnungen denkbar, etwa eine einreihige oder drei- oder mehrreihige Anordnung. Alternativ oder zusätzlich sind Anordnungen denkbar, bei denen die Querverbindungsmittel bei zwei- oder mehrreihiger Anordnung entlang des Umfangs versetzt zueinander vorgesehen sind.

Gemäß zumindest einer Ausführungsform ist jeder Verbindungsflansch aus einem separaten saugseitigen und einem druckseitigen Verbindungsflanschabschnitt gebildet, die jeweils an der Saugseite und der Druckseite mit dem jeweiligen Rotorblattsegment über die jeweiligen Verbindungselemente verbunden sind. Damit ist eine höhere Montageflexibilität gegeben, wobei insbesondere besonders gut Toleranzen kompensiert werden können.

Gemäß zumindest einer Ausführungsform sind der saugseitige und der druckseitige Abschnitt des ersten Verbindungsflansches im Bereich der Nasen- und/oder im Bereich der Endkante des Rotorblatts miteinander mittels Querverbindungsmitteln verbunden. Mit anderen Worten wird eine Endkanten- bzw. Nasenkantenverschraubung bewirkt. Im Bereich heißt unmittelbar an oder nahe der End-/Nasenkante. Dadurch wird eine besonders stabile Ausgestaltung im Bereich der jeweiligen Kanten erreicht.

Gemäß zumindest einer Ausführungsform sind der saugseitige und der druckseitige Abschnitt eines, etwa des ersten, Verbindungsflansches mit einem Endkantenelement verbunden. Das Endkantenelement kann einstückig oder mehrteilig gefertigt sein. Die Verbindung kann mittels der obigen Querverbindungsmittel, die dann sowohl das Endkantenelement als auch die Abschnitte des Verbindungsflansches fest verbinden, erfolgen. Dies bietet die Möglichkeit, ein spezielles Endkantenstück zu verwenden, welches sich beispielsweise vom Material und/oder der Elastizität vom Verbindungsflansch unterscheidet. Damit können besondere aerodynamische Wirkungen erzielt werden.

Gemäß zumindest einer Ausführungsform sind der erste und der zweite Verbindungsflansch jeweils durch eine geschlossene, der Rotorblattkontur folgende, ringartige Struktur gebildet. Dies ermöglicht eine besonders schnelle Montage, da jeder Verbindungsflansch einstückig ausgebildet ist. Weiterhin ist keine zusätzliche Verbindung an Nasen- und Endkante erforderlich. Weiter gibt es dadurch keine klaffende Fuge zwischen den beiden Flanschen.

Gemäß zumindest einer Ausführungsform sind der erste und der zweite Verbindungsflansch elektrisch leitend ausgebildet. Dadurch ist eine einfache Möglichkeit gegeben, einen Blitzableiter elektrisch von der Rotorblattspitze über die Teilungsstelle hinweg zur Rotorblattwurzel zu leiten. Mit anderen Worten müssen an der Teilungsstelle keine zusätzlichen Maßnahmen für die elektrische Leitung vorgesehen werden.

Gemäß zumindest einer Ausführungsform sind die Stoßstelle zwischen dem ersten Verbindungsflansch und dem ersten Rotorblattsegment und/oder die Stoßstelle zwischen dem zweiten Verbindungsflansch und dem zweiten Rotorblattsegment mit je einem Dichtungselement abgedichtet. Beispielsweise ist das Dichtungselement jeweils als eine ringartige Dichtung oder ein oder mehrere Dichtungsstreifen ausgebildet. Insbesondere lässt sich damit ein Spalt zwischen dem jeweiligen Verbindungsflansch und den Verbindungselementen am jeweiligen Anschlussende des entsprechenden Rotorblattsegments abdichten. Dies dient insbesondere einem Korrosionsschutz.

Gemäß einem zweiten Aspekt wird ein Verfahren zum Verbinden zweier Rotorblattsegmente eines Windenergieanlagenrotorblatts, wobei
das erste Rotorblattsegment an einem ersten Anschlussende erste Verbindungselemente und das zweite Rotorblattsegment an einem dem ersten Anschlussende zugeordneten zweiten Anschlussende zweite Verbindungselemente aufweist. Das Verfahren weist die Schritte auf:
- Montieren eines ersten Verbindungsflansches an das erste Rotorblattsegment mittels der ersten Verbindungselemente,
- Montieren eines zweiten Verbindungsflansches an das zweite Rotorblattsegment mittels der zweiten Verbindungselemente,
- Positionieren der beiden Rotorblattsegmente derart, dass die beiden Verbindungsflansche gegenüberliegen,
- Bewegen der beiden Rotorblattsegmente derart, dass die beiden Verbindungsflansche formschlüssig ineinander greifen, und
- Verbinden der beiden formschlüssig in Eingriff stehenden Verbindungsflansche derart miteinander, dass die beiden Rotorblattsegmente torsionssteif miteinander verbunden sind.

Das Verfahren ermöglicht im Wesentlichen die vorgenannten Vorteile und Funktionen. Das Verfahren kann entsprechend den oben genannten Ausführungsformen betreffend den ersten Aspekt weitergebildet sein, insofern gilt das oben Gesagte analog. Beispielsweise können ein oder mehrere weitere Schritte vorgesehen sein, wie beispielhaft nachfolgend aufgelistet:
- Verbinden des ersten Verbindungsflansches mittels Befestigungsmitteln mit den Verbindungselementen des ersten Rotorblattsegments, insbesondere Verschrauben mittels Längsschraubbolzen;
- Verbinden des zweiten Verbindungsflansches mittels Befestigungsmitteln mit den Verbindungselementen des zweiten Rotorblattsegments, insbesondere Verschrauben mittels Längsschraubbolzen;
- Verbinden der beiden Verbindungsflansche mittels Querverbindungsmitteln, insbesondere Verschrauben mittels Querschraubbolzen;
- Vorsehen eines Dichtungselements zum Abdichten der Stoßstelle zwischen dem entsprechenden Rotorblattsegment und dem jeweiligen Verbindungsflansch;
- und weitere.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen.

In den Figuren zeigen:
Figur 1 eine schematische Darstellung einer Windenergieanlage,
Figur 2 eine schematische Darstellung eines geteilten Rotorblatts mit zwei Rotorblattsegmenten,
Figur 3 eine schematische Schnittdarstellung einer Bolzenverbindung zweier Rotorblattsegmente eines Rotorblatts gemäß dem Stand der Technik,
Figur 4 eine perspektivische Explosionsdarstellung eines ersten Rotorblattsegments eines Rotorblatts mit einem ersten Verbindungsflansch gemäß einem Ausführungsbeispiel der Erfindung,
Figur 5 eine perspektivische Darstellung des ersten Rotorblattsegments in einem montierten Zustand,
Figur 6 eine perspektivische Detailansicht der Figur **5****,**
Figur 7 eine perspektivische Explosionsdarstellung eines zweiten Rotorblattsegments des Rotorblatts mit einem zweiten Verbindungsflansch gemäß dem Ausführungsbeispiel der Erfindung,
Figur 8 eine perspektivische Darstellung des ersten Rotorblattsegments in einem montierten Zustand,
Figur 9 eine perspektivische Detailansicht der Figur **8****,**
Figuren 10 bis 12 perspektivische Darstellungen der beiden Rotorblattsegmente beim Zusammenführen und Verbinden dieser,
Figur 13 bis 15 verschiedene Ansichten der zusammengeführten und verbundenen Rotorblattsegmente,
Figur 16 eine perspektivische Ansicht des einen Rotorblattsegments mit verbundenen Verbindungsflanschen,
Figuren 17 und 18 perspektivische Detailansichten der Nasenkante **bzw.** Endkante der verbundenen Verbindungsflansche, und
Figur 19 ein schematisches Ablaufdiagramm für eine Verfahren zum Verbinden zweier Rotorblattsegmente gemäß einem Ausführungsbeispiel der Erfindung.

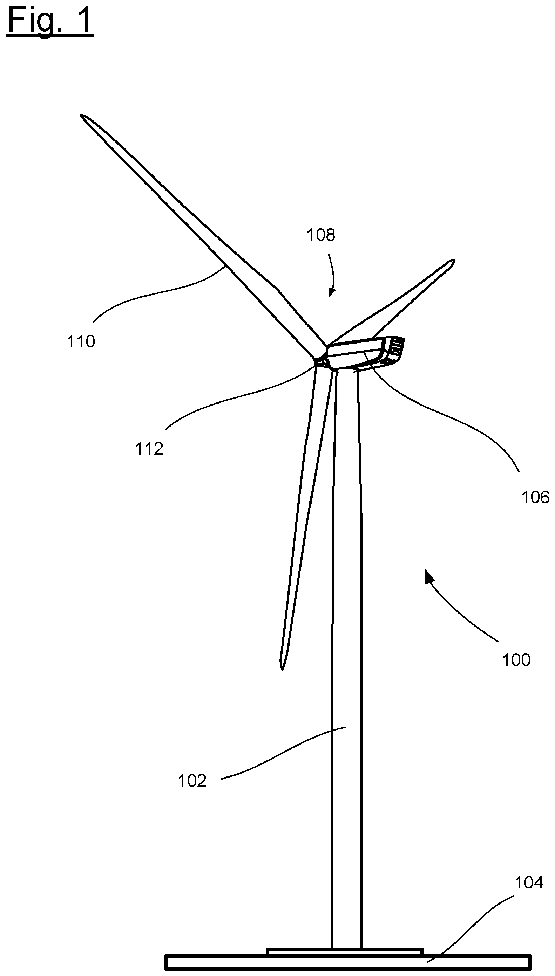

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen-)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

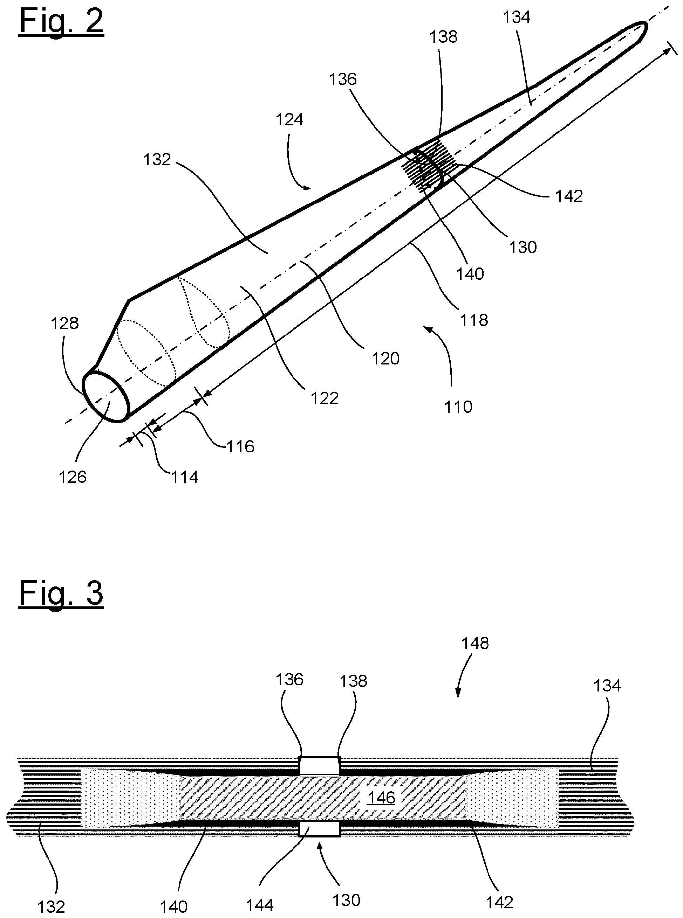

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 (auch Haupterstreckungsrichtung oder Längsachse) eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 miteinander verbunden sind. Hierzu weisen beide Segmente 132, 134 jeweils ein Anschlussende 136, 138 (auch Segmentverbindungsbereiche) auf. Das Rotorblatt 110 ist somit ein geteiltes Rotorblatt wie eingangs beschrieben. Jedes Anschlussende 136, 138 weist eine Vielzahl von Verbindungselementen 140, 142 in Form von Inserts, beispielsweise Lagerhülsen, auf, die dem Profil in Umfangsrichtung folgend angeordnet sind und für die Aufnahme von Schraubbolzen, auch Lagerbolzen oder Verbindungsbolzen genannt, ausgebildet sind. Beispielsweise weisen die ersten Verbindungselemente 140 erste Innengewinde und die zweiten Verbindungselemente 142 zweite Innengewinde oder umgekehrt auf. Alternativ können die einen Verbindungselemente lediglich Durchgangsbohrungen und die anderen Verbindungselemente Gewinde aufweisen. Ein Anschlussende 136, 138 ist beispielsweise als ein Flanscheinleger realisiert, welcher als Einlegeteil in eine Fertigungsform zur Herstellung des Rotorblattes 110 eingelegt wird. Es ist jedoch auch denkbar, dass kein Flanscheinleger vorgesehen ist und die Lagerhülsen direkt in die Rotorblatthalbschalen eingebettet und einlaminiert werden. Bei den Lagerhülsen handelt es sich beispielsweise um Stahlhülsen.

Im Folgenden wird die Verbindung beider Rotorblattsegmente 132, 134 gemäß einer herkömmlichen Lösung genauer beschrieben, wobei dies exemplarisch anhand einer einzelnen Bolzenverbindung erläutert wird.

Figur 3 zeigt eine schematische Schnittansicht in einem Teilbereich zweier verbundener Rotorblattsegmente 132, 134 an der Teilungsstelle 130, wobei eine einzelne Bolzenverbindung 148 dargestellt ist. Das erste Anschlussende 136 des ersten Rotorblattsegments 132 weist die Vielzahl von ersten Verbindungselemente 140 und das zweite Anschlussende 138 des zweiten Rotorblattsegments 134 weist die Vielzahl von zweiten Verbindungselemente 142 auf. In jeweils ein Paar zueinander fluchtend angeordneter erster und zweiter Verbindungselemente 140, 142 ist ein Verbindungsbolzen 146 eingeschraubt, der die beiden Anschlussenden 136, 138 und somit die beiden Rotorblattsegmente 132, 134 mechanisch fest verbindet. Zusätzlich ist zwischen die beiden Anschlussenden 136, 138 pro Bolzenverbindung 148 ein Druckstück 144 eingeklemmt.

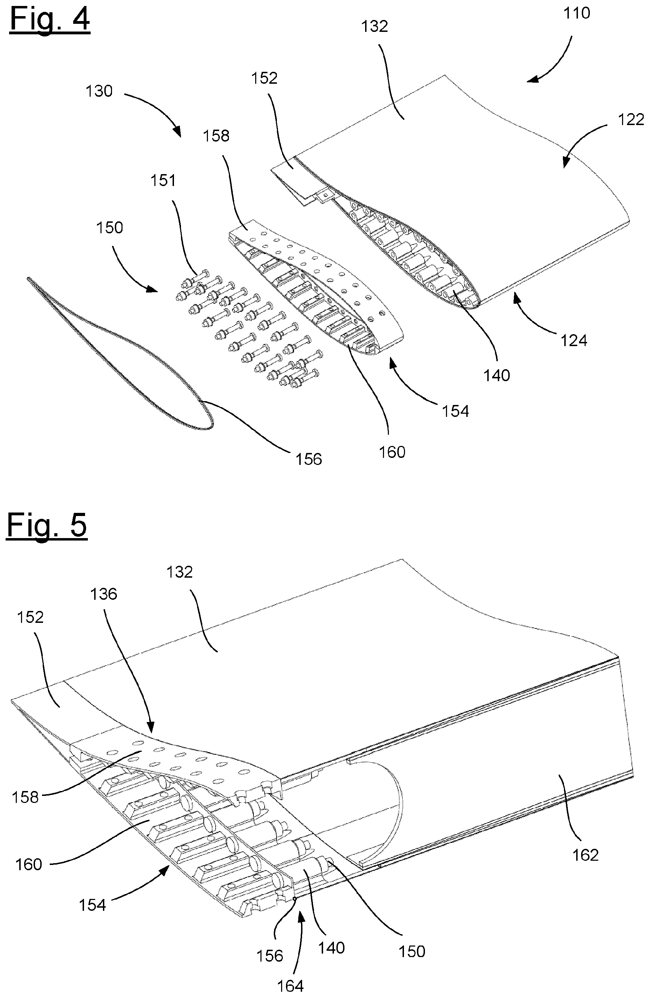

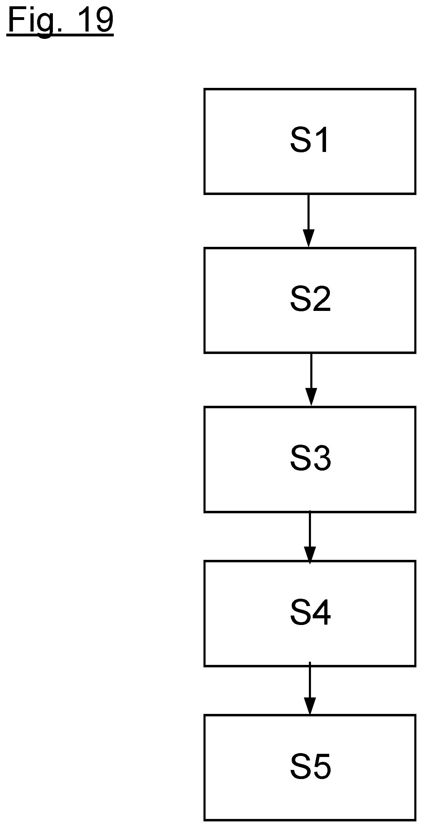

Im Folgenden wird anhand der Figuren 4 bis 18 eine verbesserte Verbindung zweier Rotorblattsegmente 132, 134 entsprechend der Erfindung beschrieben. Wesentlich ist dabei, dass die beiden Rotorblattsegmente 132, 134 nicht unmittelbar über einzelne Bolzen 146 direkt miteinander verbunden sind, sondern mittelbar über zwei Verbindungsflansche, die wiederum selbst miteinander fest verbunden sind. Die oben erwähnten Druckstücke 144 entfallen vollständig. Dabei wird auch Bezug genommen auf ein in Figur 19 dargestelltes, schematisches Ablaufdiagramm, welches ein Verfahren zum Verbinden der beiden Rotorblattsegmente 132, 134 betrifft.

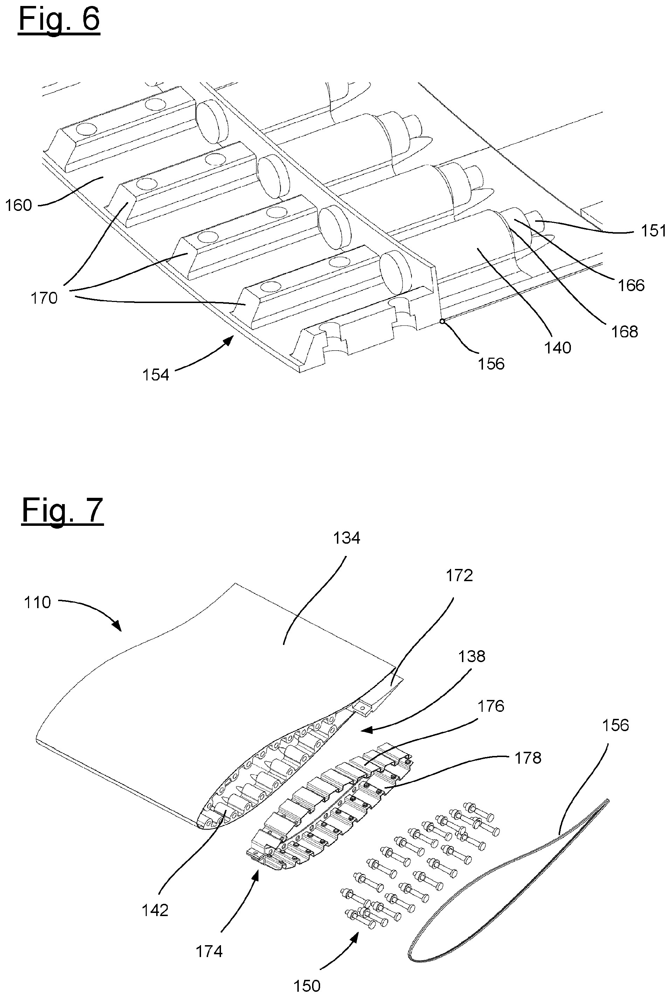

Figur 4 zeigt eine perspektivische Explosionsdarstellung des ersten Rotorblattsegments 132 des Rotorblatts 110 (nicht vollständig dargestellt). Das erste Rotorblattsegment 132 hat an der Teilungsstelle 130 des Rotorblattes 110 das erste Anschlussende 136. Das erste Anschlussende 136 weist eine Vielzahl von ersten Verbindungselementen 140 auf, die dem Profil folgend entlang des Umfangs angeordnet sind. Bei den ersten Verbindungselementen 140 handelt es sich um einlaminierte Lagerhülsen, die Durchgangsbohrungen für die Verschraubung mittels Längsbolzengarnituren 150 als eingangs erwähnte Längsverbindungsmittel aufweisen. Die Längsbolzengarnituren 150 umfassen Längsschraubbolzen 151, die über Muttern und Scheiben (s. Figur 6) mit den ersten Verbindungselementen 140 verbunden werden. Alternativ weisen die ersten Verbindungselemente Innengewinde (sog. Festgewinde) auf und die Längsschraubbolzen werden direkt in die Verbindungselemente geschraubt. Weiterhin sind ein Endkantenelement 152, ein erster Verbindungsflansch 154 sowie ein erstes Dichtungselement 156 (Dichtungsstreifen) dargestellt. Der erste Verbindungsflansch 154 ist durch zwei separate Abschnitte für die Druckseite 122 beziehungsweise Saugseite 124 gebildet, nämlich einen saugseitigen Verbindungsflanschabschnitt 158 und einen druckseitigen Verbindungsflanschabschnitt 160.

Figur 5 zeigt eine perspektivische Darstellung des ersten Rotorblattsegments 132 in einem montierten Zustand. Das Endkantenelement 152 und der erste Verbindungsflansch 154 sind entsprechend an dem ersten Anschlussende 136 angeordnet und der erste Verbindungsflansch 154, das heißt beide Verbindungsflanschabschnitte 158 und 160, ist mittels der Längsbolzengarnituren 150 fest mit dem ersten Rotorblattsegment 132 verschraubt. Zusätzlich zu erkennen ist in Figur 5 ein Steg 162 des Rotorblattes 110. Weiterhin ist das Dichtungselement 156 zu erkennen, welches die Stoßstelle 164 zwischen dem ersten Verbindungsflansch 154 und dem ersten Rotorblattsegment 132 abdichtet.

Figur 6 stellt eine perspektivische Detailansicht der Figur 5 dar, anhand derer die Verbindung zwischen druckseitigem Verbindungsflanschabschnitt 160 und den Verbindungselementen 140 vergrößert zu erkennen ist. Die Verschraubung pro Verbindungselement 140 erfolgt über jeweils einen Längsschraubbolzen 151 in Verbindung mit jeweils einer Mutter 166 und einer Scheibe 168. Jede oder einzelne der Scheiben 168 können zum Messen einer Vorspannkraft verwendet werden. Der erste Verbindungsflansch 154 weist erste Formschlusselemente 170 auf. Diese dienen dem Zusammenwirken mit korrespondierenden Elementen des zweiten Rotorblattsegments 134. Die ersten Formschlusselemente 170 sind im Ausführungsbeispiel als Rippen oder Vorsprünge ausgebildet.

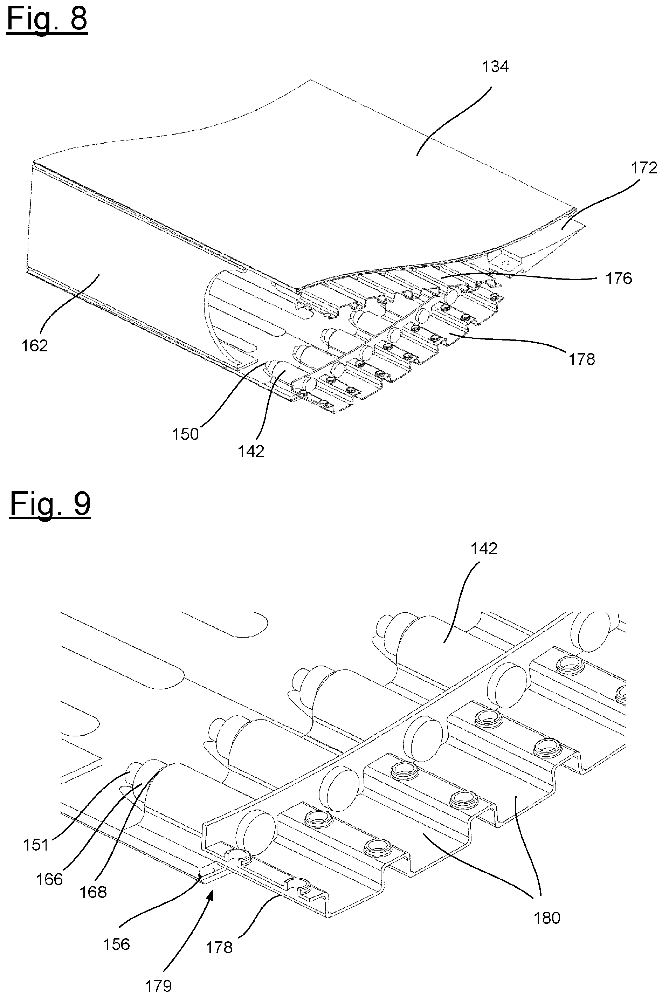

Figuren 7 bis 9 stellen das zu dem ersten Rotorblattsegment 132 korrespondierende zweite Rotorblattsegment 134 in ähnlichen Darstellungen dar. Am zweiten Anschlussende 138 sind die zweiten Inserts 142 angeordnet. Weiterhin ist ein weiteres Endkantenelement 172 vorgesehen, welches mit dem Endkantenelement 152 des ersten Rotorblattsegments 132 zusammenwirkt. Weiter ist ein zweiter Verbindungsflansch 174 vorgesehen, der durch einen saugseitigen Verbindungsflanschabschnitt 176 und einen druckseitigen Verbindungsflanschabschnitt 178 gebildet ist. Wiederum sind Bolzengarnituren 150 und eine Dichtungselement 156 vorgesehen, wobei letzteres die Stoßstelle 179 zwischen zweitem Anschlussende 138 und dem zweiten Verbindungsflansch 174 abdichtet. Mit Blick auf Figur 9 ist zu sehen, dass der zweite Verbindungsflansch 174 zweite Formschlusselemente 180 aufweist, die als Nuten oder Rillen ausgebildet sind. Die zweiten Formschlusselemente 180 sind derart ausgebildet, dass diese mit den ersten Formschlusselementen 170 formschlüssig zusammenwirken.

In einem ersten Schritt S1 des Verfahrens gemäß einem Ausführungsbeispiel der Erfindung (s. Figur 19) wird der erste Verbindungsflansch 154 wie oben beschrieben an das erste Rotorblattsegment 132 montiert. Dieser Schritt S1 kann weitere Maßnahmen wie das Anbringen oder Ansetzen des ersten Endkantenelements 152 umfassen.

In einem zweiten Schritt S2 wird der zweite Verbindungsflansch 174 analog zum ersten Verbindungsflansch 154 an das zweite Anschlussende 136 montiert. Dieser Schritt S2 kann weitere Maßnahmen wie das Anbringen oder Ansetzen des zweiten Endkantenelements 172 umfassen.

Die Schritte S1 und S2 können natürlich auch in ihrer Reihenfolge vertauscht sein. Die beiden Schritte S1 und S2 werden bevorzugt in einem herstellerseitigen Werk (unter kontrollierten Bedingungen) vollzogen werden, so dass die Montage im Feld, d.h. bei Installation einer Windenergieanlage 100, deutlich effizienter und effektiver ist.

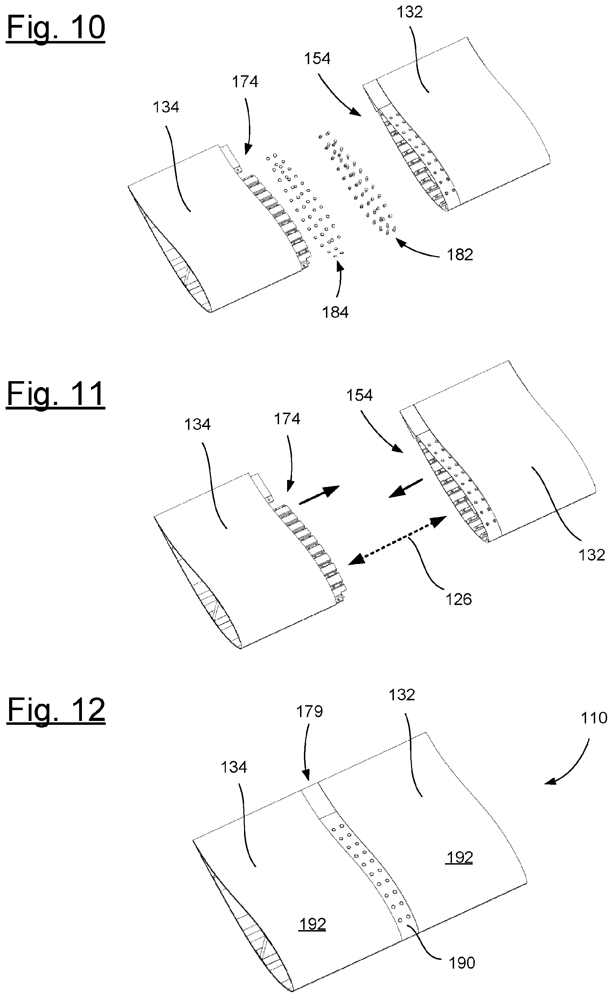

In einem dritten Schritt S3 werden die beiden Rotorblattsegmente 132, 134 derart positioniert, dass diese einander gegenüberliegen. Dies ist in Figur 10 gezeigt, die zusätzlich Querschraubbolzen 182 als Querverbindungsmittel und zugehörige Bolzendichtungen 184 (Abdeckungen) zeigt.

In einem vierten Schritt S4 werden die beiden Rotorblattsegmente 132, 134 relativ zueinander aufeinander zu bewegt, so dass die beiden Verbindungsflansche 154 und 174 formschlüssig ineinandergreifen. Die Verbindungsflansche 154, 174 bilden sozusagen Gegenstücke zueinander. Insbesondere werden die beiden Verbindungsflansche 154 und 174 axial zusammengeschoben. Im Ausführungsbeispiel werden die ersten Formschlusselemente 170 dabei in den zweiten Formschlusselementen 180 aufgenommen. Figur 12 stellt den zusammengeschobenen Zustand dar, wobei das weitere Endkantenelement 172 des zweiten Rotorblattsegments 134 im Endkantenelement 152 des ersten Rotorblattsegments 132 formschlüssig aufgenommen ist. Durch den Formschluss wird insbesondere eine einfache Selbstzentrierung bzw. - ausrichtung erreicht. Beim Zusammenschieben in diesem Schritte werden die Rotorblattsegmente 132, 134 insbesondere auf Stoß zusammengeschoben.

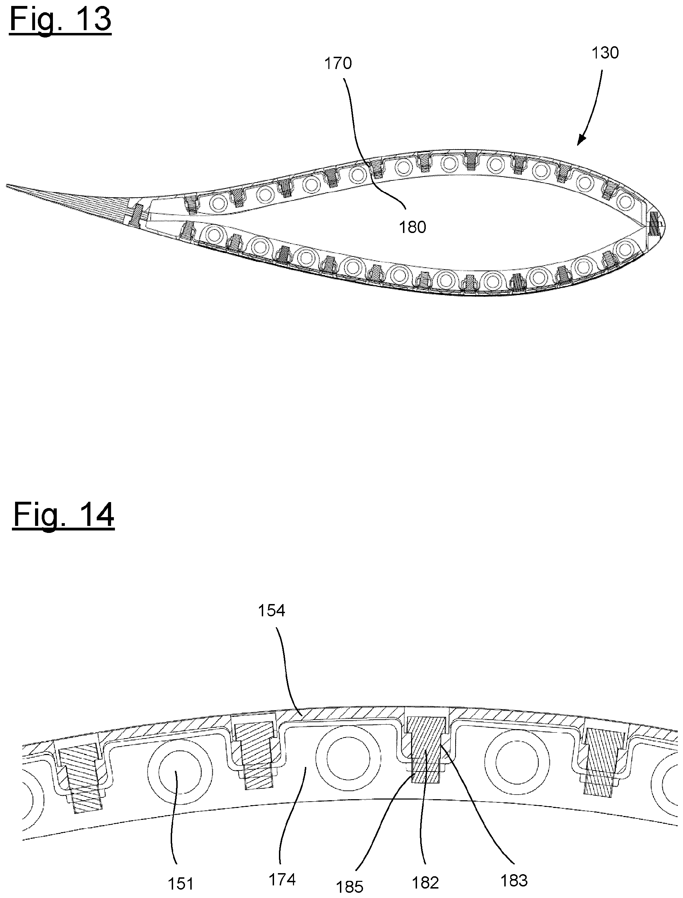

Figur 13 zeigt einen Querschnitt des zusammengeschobenen Zustands gemäß Figur 12 an der Teilungsstelle 130. Zu erkennen ist das formschlüssige Zusammenwirken der Formschlusselemente 170 und 180.

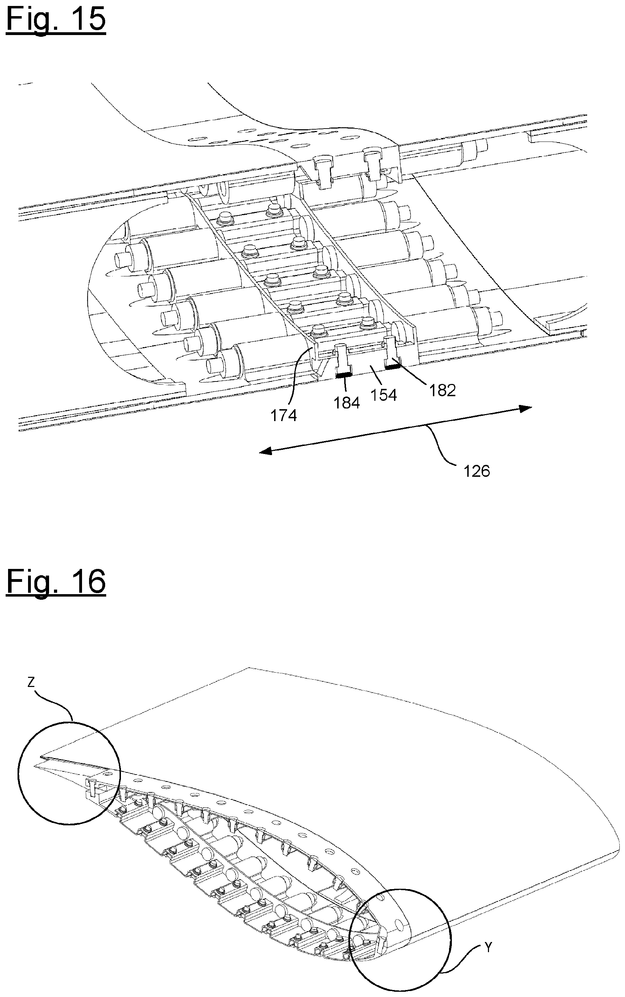

In einem fünften Schritt S5 werden die beiden Verbindungsflansche 154 und 174 mittels der Querschraubbolzen 182 fest verschraubt und die Dichtungen 184 montiert. Dies ist in Figuren 14 und 15 gezeigt, die Detailansichten der Teilungsstelle 130 zeigen. Dabei wird jeder Querschraubbolzen 182 von außerhalb des Rotorblatts 110 quer zur Längsachse 126 durch eine entsprechende Durchgangsbohrung 183 des ersten Verbindungsflansches 154 in ein entsprechendes Gewinde 185 des zweiten Verbindungsflansches 174 eingeschraubt. Anhand von Figur 15 ist darüber hinaus zu erkennen, dass die Querschraubbolzen 182, die jeweils abgedeckt sind mittels der Bolzendichtungen 184, zweireihig angeordnet sind. Insbesondere sind pro Formschlussverbindung eines ersten Formschlusselements 170 mit einem zweiten Formschlusselement 180 jeweils zwei Querschraubbolzen 182 vorgesehen.

Mit Blick auf Figur 12 ist im zusammengeschobenen wie auch fixierten finalen Montagezustand der erste Verbindungsflansch 154 an seiner Außenseite 190 in einem bündigen Abschluss mit den angrenzenden äußeren Oberflächen 192 der beiden Rotorblattsegmente 132, 134. Auch sei an dieser Stelle erwähnt, dass die beiden Verbindungsflansche 154, 175 elektrisch leitend ausgebildet sind und aufgrund ihrer Verbindung zueinander in elektrisch leitfähigen Kontakt stehen. Dies kann man sich zu Nutze machen, um beispielsweise eine elektrische Verbindung vom einen zum anderen Rotorblattsegment herzustellen, beispielsweise für einen Blitzableiter.

Damit sind die eingangs genannten Vorteile und Funktionen erreicht, wobei insbesondere durch die Verbindungsflansche 154, 174 und das formschlüssige Zusammenwirken eine einfache Montage und dabei eine besonders effektive, torsionssteife Verbindung der beiden Rotorblattsegmente 132, 134 geschaffen ist.

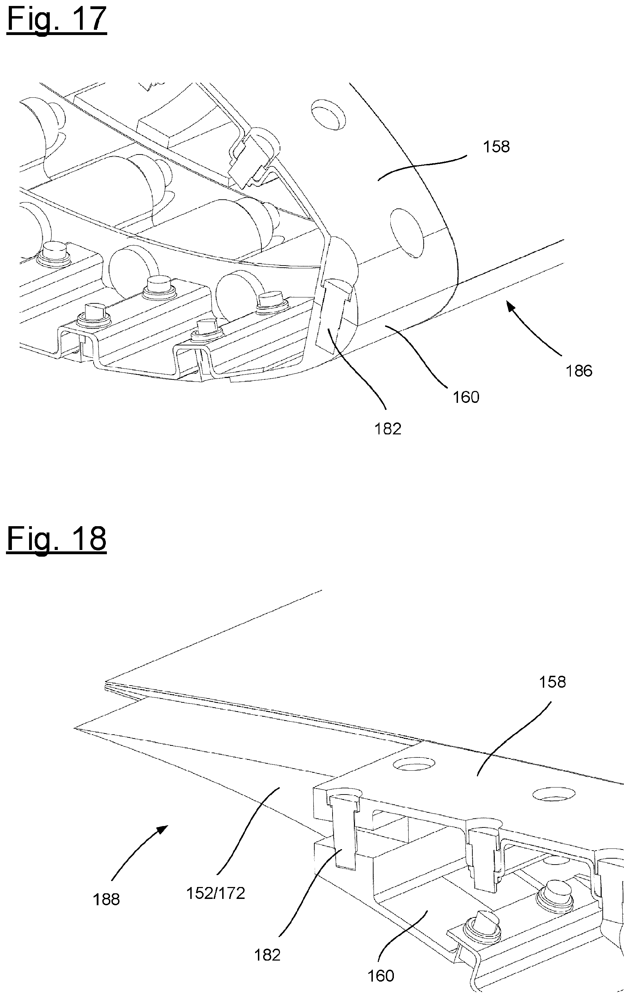

Figur 16 zeigt erneut eine perspektivische Ansicht der Teilungsstelle 130 mit montierten Verbindungsflanschen 154, 174. Figur 17 zeigt das Detail Y gemäß Figur 16, welches die Verbindung des saugseitigen Verbindungsflanschabschnitts 158 mit dem druckseitigen Verbindungsflanschabschnitt 160 mittels Querschraubbolzen 182 an der Nasenkante 186 zeigt. Figur 18 zeigt das Detail Z gemäß Figur 16, welches die Verbindung des saugseitigen Verbindungsflanschabschnitts 158 mit dem druckseitigen Verbindungsflanschabschnitt 160 mittels Querschraubbolzen 182 an der Endkante 188 zeigt. Besonders ist hierbei die gleichzeitige Verschraubung von Endkante 188 und Nasenkante 186 mittels Querbolzen 182.

### Bezugszeichenliste

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschlussende
- 128: Flanschanschluss
- 130: Teilungsstelle
- 132: erstes Rotorblattsegment
- 134: zweites Rotorblattsegment
- 136: erstes Anschlussende
- 138: zweites Anschlussende
- 140: erstes Verbindungselement
- 142: zweites Verbindungselement
- 144: Druckstück
- 145: Längsachse eines Druckstücks
- 146: Verbindungsbolzen
- 148: Bolzenverbindung
- 150: Längsbolzengarnituren
- 151: Längsschraubbolzen
- 152: Endkantenelement
- 154: erster Verbindungsflansch
- 156: Dichtungselement
- 158: saugseitiger Verbindungsflanschabschnitt
- 160: druckseitiger Verbindungsflanschabschnitt
- 162: Steg
- 164: Stoßstelle
- 166: Mutter
- 168: Scheibe
- 170: erstes Formschlusselement
- 172: weiteres Endkantenelement
- 174: zweiter Verbindungsflansch
- 176: saugseitiger Verbindungsflanschabschnitt
- 178: druckseitiger Verbindungsflanschabschnitt
- 179: Stoßstelle
- 180: zweites Formschlusselement
- 182: Querschraubbolzen
- 183: Durchgangsbohrung
- 184: Bolzendichtung
- 185: Gewinde
- 186: Nasenkante
- 188: Endkante
- 190: Außenseite
- 192: Oberfläche

## Patentansprüche

1. Windenergieanlagenrotorblatt (110), welches durch ein erstes Rotorblattsegment (132) und ein zweites Rotorblattsegment (134) gebildet ist, wobei
- das erste Rotorblattsegment (132) ein erstes Anschlussende (136) mit ersten Verbindungselementen (140) aufweist,
- das zweite Rotorblattsegment (134) ein zweites Anschlussende (138) mit zweiten Verbindungselementen (142) aufweist,
- an das erste Rotorblattsegment (132) mittels der ersten Verbindungselemente (140) ein erster Verbindungsflansch (154) montiert ist,
- an das zweite Rotorblattsegment (134) mittels der zweiten Verbindungselemente (142) ein zweiter Verbindungsflansch (174) montiert ist, **dadurch gekennzeichnet, dass**
die beiden Verbindungsflansche (154, 174) formschlüssig miteinander in Eingriff gebracht sind, so dass die beiden Rotorblattsegmente (132, 134) torsionssteif miteinander verbunden sind.

2. Windenergieanlagenrotorblatt (110) nach Anspruch 1, wobei für die Ausbildung des formschlüssigen Eingriffs der erste Verbindungsflansch (154) und der zweite Verbindungsflansch (174) axial ineinandergeschoben sind.

3. Windenergieanlagenrotorblatt (110) nach Anspruch 1 oder 2, wobei zum Ausbilden des formschlüssigen Eingriffs der erste Verbindungsflansch (154) als erste Formschlusselemente (170) Rippen, Vorsprünge, Kanten, Nuten oder Konturen und der zweite Verbindungsflansch (174) dazu korrespondierende zweite Formschlusselemente (180) aufweist.

4. Windenergieanlagenrotorblatt (110) nach einem der vorhergehenden Ansprüche, wobei im formschlüssigen Eingriff der erste Verbindungsflansch (154) oder der zweite Verbindungsflansch (174) eine Außenseite (190) bildet, die jeweils im Wesentlichen bündig mit der angrenzenden äußeren Oberfläche (192) des ersten Rotorblattsegments (132) und des zweiten Rotorblattsegments (134) abschließt.

5. Windenergieanlagenrotorblatt (110) nach einem der vorhergehenden Ansprüche, wobei der erste Verbindungsflansch (154) über Längsverbindungsmittel mit den ersten Verbindungselementen (140) des ersten Rotorblattsegments (132) und der zweite Verbindungsflansch (174) über Längsverbindungsmittel mit den zweiten Verbindungselementen (142) des zweiten Rotorblattsegments (134) verbunden sind, während der erste Verbindungsflansch (154) und der zweite Verbindungsflansch (174) über Querverbindungsmittel miteinander verbunden sind.

6. Windenergieanlagenrotorblatt (110) nach Anspruch 5, wobei die Querverbindungsmittel Querschraubbolzen (182) sind und für die Verbindung der beiden Verbindungsflansche (154, 174) einer der beiden Verbindungsflansche (154, 174) Gewinde (185) für die Querschraubbolzen (182) aufweist, während der andere der beiden Verbindungsflansche (154, 174) Durchgangsbohrungen (183) für die Querschraubbolzen (182) aufweist.

7. Windenergieanlagenrotorblatt (110) nach Anspruch 5 oder 6, wobei die Querverbindungsmittel zweireihig an der Saug- und Druckseite (122, 124) der Verbindungsflansche (154, 174) angeordnet sind.

8. Windenergieanlagenrotorblatt (110) nach einem der vorhergehenden Ansprüche, wobei jeder Verbindungsflansch (154, 174) aus einem separaten saugseitigen und einem druckseitigen Verbindungsflanschabschnitt (158, 160, 176, 178) gebildet ist, die jeweils an der Saugseite (124) und der Druckseite (122) mit dem jeweiligen Rotorblattsegment (132, 134) über die jeweiligen Verbindungselemente (140, 142) verbunden sind.

9. Windenergieanlagenrotorblatt (110) nach einem der vorhergehenden Ansprüche, wobei der saugseitige und der druckseitige Verbindungsflanschabschnitt (158, 160) des ersten Verbindungsflansches (154) im Bereich der Nasen- und/oder im Bereich der Endkante (186, 188) des Windenergieanlagenrotorblatts (110) miteinander mittels Querverbindungsmitteln verbunden sind.

10. Windenergieanlagenrotorblatt (110) nach einem der vorhergehenden Ansprüche, wobei der saugseitige und der druckseitige Verbindungsflanschabschnitt (158, 160) des ersten Verbindungsflansches (154) mit einem Endkantenelement (152) verbunden sind.

11. Windenergieanlagenrotorblatt (110) nach einem der Ansprüche 1 bis 7, wobei der erste und der zweite Verbindungsflansch (154, 174) jeweils durch eine geschlossene, der Rotorblattkontur folgende, ringartige Struktur gebildet sind.

12. Windenergieanlagenrotorblatt (110) nach einem der vorhergehenden Ansprüche, wobei der erste und der zweite Verbindungsflansch (154, 174) elektrisch leitend ausgebildet sind.

13. Windenergieanlagenrotorblatt (110) nach einem der vorhergehenden Ansprüche, wobei die Stoßstelle (164) zwischen dem ersten Verbindungsflansch (154) und dem ersten Rotorblattsegment (132) und/oder die Stoßstelle (179) zwischen dem zweiten Verbindungsflansch (174) und dem zweiten Rotorblattsegment (134) mit je einem Dichtungselement (156) abgedichtet sind.

14. Verfahren zum Verbinden zweier Rotorblattsegmente (132, 134) eines Windenergieanlagenrotorblatts (110), wobei das erste Rotorblattsegment (132) an einem ersten Anschlussende (136) erste Verbindungselemente (140) und das zweite Rotorblattsegment (134) an einem dem ersten Anschlussende (136) zugeordneten zweiten Anschlussende (138) zweite Verbindungselemente (142) aufweist, das Verfahren aufweisend die Schritte:
- Montieren eines ersten Verbindungsflansches (154) an das erste Rotorblattsegment (132) mittels der ersten Verbindungselemente (140),
- Montieren eines zweiten Verbindungsflansches (174) an das zweite Rotorblattsegment (132) mittels der zweiten Verbindungselemente (142),
- Positionieren der beiden Rotorblattsegmente (132, 134) derart, dass die beiden Verbindungsflansche (154, 174) gegenüberliegen,
- Bewegen der beiden Rotorblattsegmente (132, 134) derart, dass die beiden Verbindungsflansche (154, 174) formschlüssig ineinandergreifen, und
- Verbinden der beiden formschlüssig in Eingriff stehenden Verbindungsflansche (154, 174) derart miteinander, dass die beiden Rotorblattsegmente (132, 134) torsionssteif miteinander verbunden sind.

## Claims

1. Wind turbine rotor blade (110) which is formed by a first rotor blade segment (132) and a second rotor blade segment (134), wherein
- the first rotor blade segment (132) comprises a first connection end (136) with first connecting elements (140),
- the second rotor blade segment (134) comprises a second connection end (138) with second connecting elements (142),
- a first connecting flange (154) is mounted on the first rotor blade segment (132) by means of the first connecting elements (140),
- a second connecting flange (174) is mounted on the second rotor blade segment (134) by means of the second connecting elements (142), **characterized in that**
the two connecting flanges (154, 174) are brought into form-fitting engagement with one another such that the two rotor blade segments (132, 134) are connected to one another in a torsionally rigid manner.

2. Wind turbine rotor blade (110) according to claim 1, wherein, for forming the form-fitting engagement, the first connecting flange (154) and the second connecting flange (174) are axially pushed into one another.

3. Wind turbine rotor blade (110) according to claim 1 or 2, wherein, for forming the form-fitting engagement, the first connecting flange (154) comprises, as first form-fitting elements (170), ribs, projections, edges, grooves or contours, and the second connecting flange (174) comprises second form-fitting elements (180) corresponding thereto.

4. Wind turbine rotor blade (110) according to any one of the preceding claims, wherein, in the form-fitting engagement, the first connecting flange (154) or the second connecting flange (174) forms an outer side (190) which is in each case substantially flush with the adjacent outer surface (192) of the first rotor blade segment (132) and of the second rotor blade segment (134).

5. Wind turbine rotor blade (110) according to any one of the preceding claims, wherein the first connecting flange (154) is connected via longitudinal connecting means to the first connecting elements (140) of the first rotor blade segment (132) and the second connecting flange (174) is connected via longitudinal connecting means to the second connecting elements (142) of the second rotor blade segment (134), while the first connecting flange (154) and the second connecting flange (174) are connected to one another via transverse connecting means.

6. Wind turbine rotor blade (110) according to claim 5, wherein the transverse connecting means are transverse screw bolts (182) and, for the connection of the two connecting flanges (154, 174), one of the two connecting flanges (154, 174) comprises threads (185) for the transverse screw bolts (182), while the other of the two connecting flanges (154, 174) comprises through-bores (183) for the transverse screw bolts (182).

7. Wind turbine rotor blade (110) according to claim 5 or 6, wherein the transverse connecting means are arranged in two rows on the suction and pressure side (122, 124) of the connecting flanges (154, 174).

8. Wind turbine rotor blade (110) according to any one of the preceding claims, wherein each connecting flange (154, 174) is formed from a separate suction-side and a pressure-side connecting flange section (158, 160, 176, 178), which are connected on the suction side (124) and the pressure side (122), respectively, to the respective rotor blade segment (132, 134) via the respective connecting elements (140, 142).

9. Wind turbine rotor blade (110) according to any one of the preceding claims, wherein the suction-side and the pressure-side connecting flange section (158, 160) of the first connecting flange (154) are connected to one another by means of transverse connecting means in the region of the leading edge and/or in the region of the trailing edge (186, 188) of the wind turbine rotor blade (110).

10. Wind turbine rotor blade (110) according to any one of the preceding claims, wherein the suction-side and the pressure-side connecting flange section (158, 160) of the first connecting flange (154) are connected to a trailing edge element (152).

11. Wind turbine rotor blade (110) according to any one of claims 1 to 7, wherein the first and the second connecting flange (154, 174) are each formed by a closed, ring-like structure following the rotor blade contour.

12. Wind turbine rotor blade (110) according to any one of the preceding claims, wherein the first and the second connecting flange (154, 174) are formed to be electrically conductive.

13. Wind turbine rotor blade (110) according to any one of the preceding claims, wherein the joint (164) between the first connecting flange (154) and the first rotor blade segment (132) and/or the joint (179) between the second connecting flange (174) and the second rotor blade segment (134) are sealed with a respective sealing element (156).

14. Method for connecting two rotor blade segments (132, 134) of a wind turbine rotor blade (110), wherein the first rotor blade segment (132) comprises first connecting elements (140) at a first connection end (136) and the second rotor blade segment (134) comprises second connecting elements (142) at a second connection end (138) assigned to the first connection end (136), the method comprising the steps of:
- mounting a first connecting flange (154) on the first rotor blade segment (132) by means of the first connecting elements (140),
- mounting a second connecting flange (174) on the second rotor blade segment (132) by means of the second connecting elements (142),
- positioning the two rotor blade segments (132, 134) such that the two connecting flanges (154, 174) face each other,
- moving the two rotor blade segments (132, 134) such that the two connecting flanges (154, 174) engage into one another in a form-fitting manner, and
- connecting the two connecting flanges (154, 174), which are in form-fitting engagement, to one another such that the two rotor blade segments (132, 134) are connected to one another in a torsionally rigid manner.

## Revendications

1. Pale de rotor d'éolienne (110), qui est formée par un premier segment de pale de rotor (132) et un deuxième segment de pale de rotor (134), dans laquelle
- le premier segment de pale de rotor (132) comprend une première extrémité de raccordement (136) avec des premiers éléments de liaison (140),
- le deuxième segment de pale de rotor (134) comprend une deuxième extrémité de raccordement (138) avec des deuxièmes éléments de liaison (142),
- une première bride de liaison (154) est montée sur le premier segment de pale de rotor (132) au moyen des premiers éléments de liaison (140),
- une deuxième bride de liaison (174) est montée sur le deuxième segment de pale de rotor (134) au moyen des deuxièmes éléments de liaison (142), **caractérisée en ce que** les deux brides de liaison (154, 174) sont mises en prise l'une avec l'autre par complémentarité de forme, de telle sorte que les deux segments de pale de rotor (132, 134) sont reliés l'un à l'autre de manière rigide en torsion.

2. Pale de rotor d'éolienne (110) selon la revendication 1, dans laquelle, pour la réalisation de la mise en prise par complémentarité de forme, la première bride de liaison (154) et la deuxième bride de liaison (174) sont emboîtées axialement l'une dans l'autre.

3. Pale de rotor d'éolienne (110) selon la revendication 1 ou 2, dans laquelle, pour réaliser la mise en prise par complémentarité de forme, la première bride de liaison (154) comprend, en tant que premiers éléments de complémentarité de forme (170), des nervures, des saillies, des arêtes, des rainures ou des contours, et la deuxième bride de liaison (174) comprend des deuxièmes éléments de complémentarité de forme (180) correspondants à ceux-ci.

4. Pale de rotor d'éolienne (110) selon l'une des revendications précédentes, dans laquelle, dans la mise en prise par complémentarité de forme, la première bride de liaison (154) ou la deuxième bride de liaison (174) forme un côté extérieur (190) qui affleure respectivement sensiblement la surface extérieure (192) adjacente du premier segment de pale de rotor (132) et du deuxième segment de pale de rotor (134).

5. Pale de rotor d'éolienne (110) selon l'une des revendications précédentes, dans laquelle la première bride de liaison (154) est reliée par l'intermédiaire de moyens de liaison longitudinaux aux premiers éléments de liaison (140) du premier segment de pale de rotor (132) et la deuxième bride de liaison (174) est reliée par l'intermédiaire de moyens de liaison longitudinaux aux deuxièmes éléments de liaison (142) du deuxième segment de pale de rotor (134), tandis que la première bride de liaison (154) et la deuxième bride de liaison (174) sont reliées l'une à l'autre par l'intermédiaire de moyens de liaison transversaux.

6. Pale de rotor d'éolienne (110) selon la revendication 5, dans laquelle les moyens de liaison transversaux sont des boulons à vis transversaux (182) et, pour la liaison des deux brides de liaison (154, 174), l'une des deux brides de liaison (154, 174) comprend des filetages (185) pour les boulons à vis transversaux (182), tandis que l'autre des deux brides de liaison (154, 174) comprend des alésages traversants (183) pour les boulons à vis transversaux (182).

7. Pale de rotor d'éolienne (110) selon la revendication 5 ou 6, dans laquelle les moyens de liaison transversaux sont agencés sur deux rangées sur le côté d'aspiration et le côté de pression (122, 124) des brides de liaison (154, 174).

8. Pale de rotor d'éolienne (110) selon l'une des revendications précédentes, dans laquelle chaque bride de liaison (154, 174) est formée d'une section de bride de liaison du côté d'aspiration et d'une section de bride de liaison du côté de pression (158, 160, 176, 178) séparées, qui sont reliées respectivement sur le côté d'aspiration (124) et sur le côté de pression (122) au segment de pale de rotor (132, 134) respectif par l'intermédiaire des éléments de liaison (140, 142) respectifs.

9. Pale de rotor d'éolienne (110) selon l'une des revendications précédentes, dans laquelle la section de bride de liaison du côté d'aspiration et la section de bride de liaison du côté de pression (158, 160) de la première bride de liaison (154) sont reliées l'une à l'autre au moyen de moyens de liaison transversaux dans la zone du bord d'attaque et/ou dans la zone du bord de fuite (186, 188) de la pale de rotor d'éolienne (110).

10. Pale de rotor d'éolienne (110) selon l'une des revendications précédentes, dans laquelle la section de bride de liaison du côté d'aspiration et la section de bride de liaison du côté de pression (158, 160) de la première bride de liaison (154) sont reliées à un élément de bord de fuite (152).

11. Pale de rotor d'éolienne (110) selon l'une des revendications 1 à 7, dans laquelle la première et la deuxième bride de liaison (154, 174) sont formées chacune par une structure annulaire fermée suivant le contour de la pale de rotor.

12. Pale de rotor d'éolienne (110) selon l'une des revendications précédentes, dans laquelle la première et la deuxième bride de liaison (154, 174) sont réalisées de manière électriquement conductrice.

13. Pale de rotor d'éolienne (110) selon l'une des revendications précédentes, dans laquelle la jonction (164) entre la première bride de liaison (154) et le premier segment de pale de rotor (132) et/ou la jonction (179) entre la deuxième bride de liaison (174) et le deuxième segment de pale de rotor (134) sont rendues étanches chacune avec un élément d'étanchéité (156).

14. Procédé de liaison de deux segments de pale de rotor (132, 134) d'une pale de rotor d'éolienne (110), dans lequel le premier segment de pale de rotor (132) comprend des premiers éléments de liaison (140) à une première extrémité de raccordement (136) et le deuxième segment de pale de rotor (134) comprend des deuxièmes éléments de liaison (142) à une deuxième extrémité de raccordement (138) associée à la première extrémité de raccordement (136), le procédé comprenant les étapes suivantes :
- montage d'une première bride de liaison (154) sur le premier segment de pale de rotor (132) au moyen des premiers éléments de liaison (140),
- montage d'une deuxième bride de liaison (174) sur le deuxième segment de pale de rotor (132) au moyen des deuxièmes éléments de liaison (142),
- positionnement des deux segments de pale de rotor (132, 134) de telle sorte que les deux brides de liaison (154, 174) se font face,
- déplacement des deux segments de pale de rotor (132, 134) de telle sorte que les deux brides de liaison (154, 174) s'engagent l'une dans l'autre par complémentarité de forme, et
- liaison l'une à l'autre des deux brides de liaison (154, 174) en prise par complémentarité de forme, de telle sorte que les deux segments de pale de rotor (132, 134) sont reliés l'un à l'autre de manière rigide en torsion.
